Europäisches Patentamt

European Patent Office

Office européen des brevets

(11) Publication number: **0 421 963 A1**

## (12) EUROPEAN PATENT APPLICATION

(21) Application number: 90850302.2

(22) Date of filing: 06.09.90

(51) Int. Cl.⁵: **B65G 1/02, B65G 7/08**

(30) Priority: 11.09.89 SE 8902971

(43) Date of publication of application:
10.04.91 Bulletin 91/15

(84) Designated Contracting States:
BE DE ES FR GB IT NL SE

(71) Applicant: **BT INDUSTRIES AB**
**P.O. Box 470**
**S-581 05 Linköping(SE)**

(72) Inventor: **Adell, Lars**
**Fylkinggatan 45**
**S-595 00 Mjölby(SE)**

(74) Representative: **Norin, Klas**
**Kooperativa förbundet Patent Department**
**P.O. Box 15200**
**S-104 65 Stockholm(SE)**

(54) **A pallet drawer.**

(57) A pallet drawer for handling and storing loads in a storage structure, comprising a support frame (15) which is intended to be installed in the storage structure (12), and a load-carrying surface (19) which is mounted on the support frame and is intended for carrying and moving a load unit (20) between a position located within the storage structure and a position located outwardly of the structure. The support frame comprises a first frame part (16) which is mounted fixedly in the support structure and a second frame part (29) which is mounted for movement along the first frame part. As the second frame part moves it carries with it the load-carrying surface and therewith causes the load unit to be moved. The second frame part (29) is so guided in relation to the first frame part (16) that the load unit is lowered to a lower level during its movement to the outwardly located position. Guide means (21, 36, 37) are provided for tipping the load-carrying surface (19) forwards in relation to the support frame, so that the load-carrying surface and therewith the load unit is displaced outwards, lowered and tipped forwards in the outwardly located position.

EP 0 421 963 A1

# A PALLET DRAWER

The present invention relates to a pallet drawer for handling and storing loads preferably in a storage structure, said pallet drawer comprising a support frame which is intended to be fitted to the storage structure, and a load-carrying surface mounted on the support frame and functioning to carry and to move a load unit between a position in which said load-carrying surface is located retracted within the storage structure, called hereinafter the retracted position, and a position in which said surface is located outside said structure, referred to hereinafter as the withdrawn position, said support frame comprising a first frame part which is rigidly fitted to the storage structure and a second frame part which is movable along the first frame part and which, when moving along said first frame part, carries with it the load-carrying surface and therewith moves the load unit.

Several embodiments of this kind of pallet drawer are known to the art and are used to improve access to the load-units stored in the storage structure. The pallet drawers are particularly suited for installation close to the ground level of the storage structure, in conjunction with an arrangement of pick stations or loading and fitting stations, where fitters pick items directly from open storage boxes. This greatly increases the usefulness of the storage structure, since whole pallets can be drawn out and made accessible for items to be picked therefrom. One problem, however, is that the height through which the items must be lifted is often unfavourable to the fitters or workmen concerned, particularly when the storage boxes have high sides which limit access to items at the bottom of the box. The seriousness of this drawback increases with increasing flow of goods and is particularly manifest, for instance, in FMS-systems, in which large quantities of raw materials, semi-fabrications and finished items pass between the storage structure and the working machines.

Consequently, an object of the present invention is to provide a pallet drawer which will increase accessibility still further and therewith afford an increase in storage capacity and improve the working environment of the workmen concerned. Another object is to enable the pallet drawer to be handled readily despite this increase in load capacity. Other objects of the invention and advantages afforded thereby will be evident from the following description.

The objects of the invention are achieved with a pallet drawer having the characterizing features set forth in the following Claims.

The invention is based on the realization that hitherto horizontal withdrawal movement of the loads is not sufficient to afford satisfactory access without supplementing this horizontal movement with a vertical and tipping movement. This is rectified in accordance with the invention in that the load-carrying surface while moving to its outwardly withdrawn position is also moved to a lower or higher level. In addition a separate guide means is provided for tipping the load-carrying surface forwards in relation to the plane of the support frame. The load unit on the load-supporting surface is thus displaced outwards, lowered or raised and tipped forwards, therewith providing the desired exposure of the content(s) of said load unit.

In accordance with one preferred embodiment of the invention, withdrawal of the load unit from the storage structure and lowering or raising and tipping of the load unit is effected at one and the same time with the aid of a drive motor common to all such movements.

The invention will now be described in more detail with reference to the accompanying drawings, in which:

Figure 1 a side view of a pallet drawer in a retracted position;

Figure 2 is a side view of the pallet drawer in a withdrawn position;

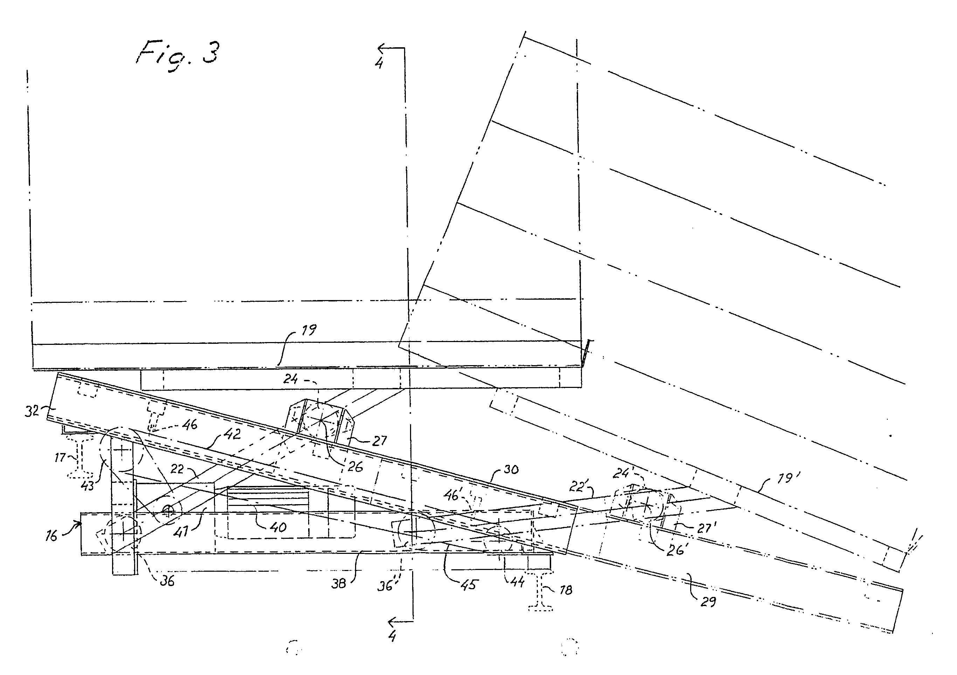

Figure 3 is a detailed view of the pallet drawer in both a retracted and a withdrawn position; and

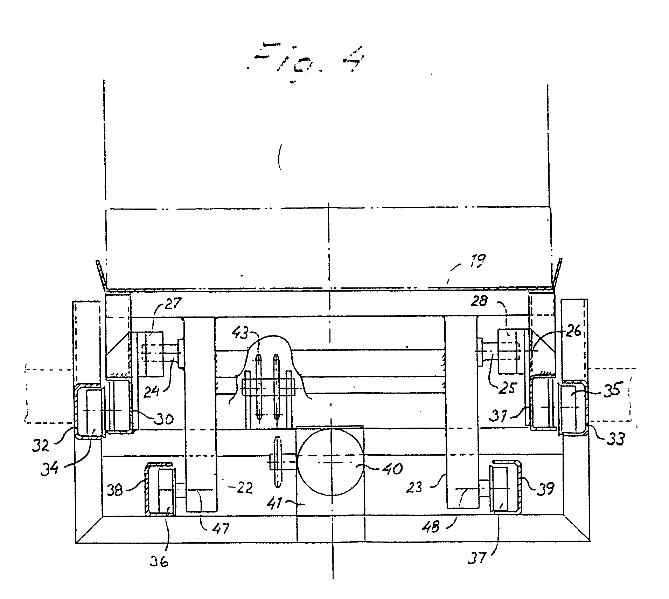

Figure 4 is a cross-sectional view of the pallet drawer taken on the line 4-4 in Figure 3.

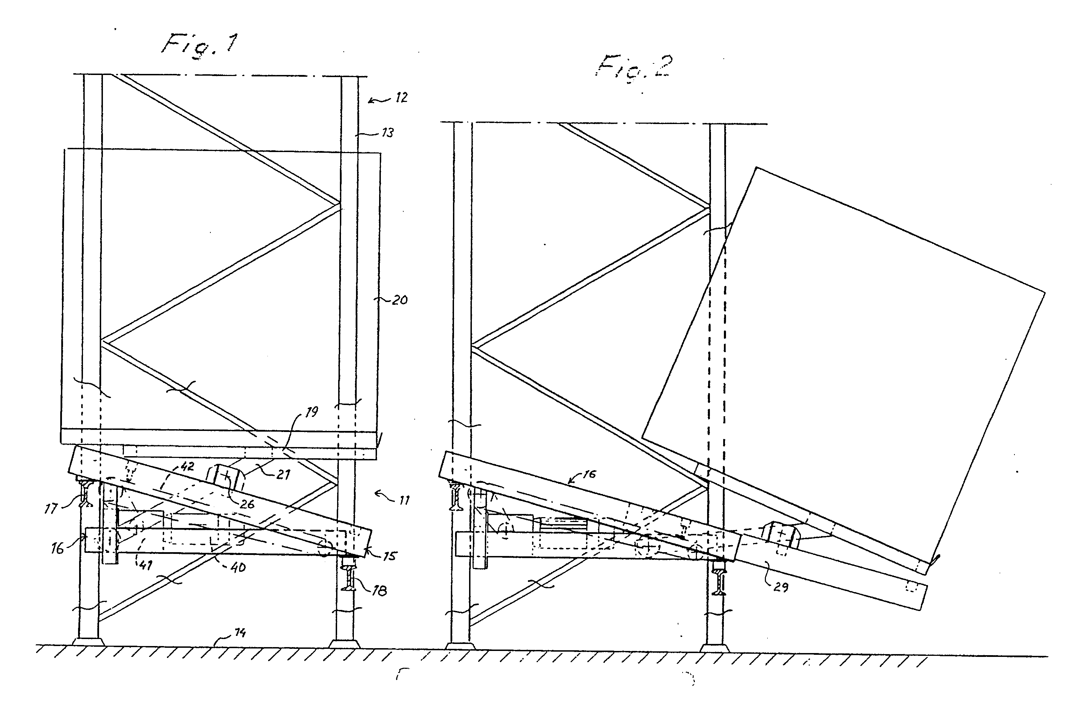

Figure 1 illustrates the pallet drawer 11 installed in a storage structure 12 constructed of a plurality of upstanding pillars 13 and a number of carrier beams (not shown) extending therebetween to define a plurality of shelving compartments in which pallet locations are arranged. The storage structure is normally served by a high-lift truck or crane which is driven along the rear side of the structure, so as not to disturb any pallet drawers which might be withdrawn from the structure. The pallet drawers are preferably located close to the floor 14 of the structure as a replacement for a fixed, lowest shelf facility, but may also be fitted to a storage structure in the form of a smaller frame construction arranged quite freely from storage shelves or pallet storage structures. The illustrated pallet drawer includes a support frame 15 which is fixedly mounted on horizontal support beams 17, 18 in the storage structure through the intermediary of a first frame part 16. Mounted on the support frame 15 is a loadcarrying surface 19 which can be given different configurations, depending on the type of load to be handled. The loads 20 typically have the form of a pallet having a plurality of pallet collars in which a large number of small items are placed, although the loads may also consist of other boxes or so-called pallets and fixtures, when the storage structure is intended to form part of an FMS-system. The load carrying surface 19 is mounted on the support frame 15 with the aid of a rearwardly sloping bracket arm 21 comprising two bars 22, 23. The bars are welded to the load-carrying surface 19 and present journal pins 24, 25 which define a pivot axle 26 for the load-carrying surface as a whole. The journal pins are mounted in corresponding journal mounts 27, 28, which are fixedly mounted on a second frame part 29 of the support frame 15. This second frame part comprises mainly two frame members 30, 31 which can be moved along a rectilinear, forwardly sloping path formed by two U-section frame members 32, 33 of the first frame part 16. This movement is guided by wheels 34, 35 which are mounted in the inner frame members 30, 31 so as to run along the outer frame members 32, 33. The second frame part 29 will therewith perform telescopic movement between a retracted position, shown in Figure 1, and a withdrawn position shown in Figure 2.

Guide devices in the form of guide wheels 36, 37 are mounted on the outer end of the bracket arm 21, i.e. at the ends of the bracket bars 22, 23. The guide wheels 36, 37 are intended to run along a horizontal, rectilinear path formed by two profiled sections 38, 39 of U-shaped cross-section and forming part of the first frame part 16. The first rectilinear path formed by the bars 30-33 and the second rectilinear path converge towards each other at a mutual angle of 10-30°, preferably between 15 and 25°. Relative movement of the frame part 16, 29 is preferably achieved with the aid of a drive motor 40, which drives an endless belt 42 through the intermediary of a worm gear 41. The endless belt 42 travels around end wheels 43, 44 fixedly mounted on the first frame part 16, whereas the actual chain belt 45 is attached to the other frame part 29 by means of an attachment device 46.

When occupying its retracted position shown in Figure 1, the load-carrying surface 19, and therewith the load 20, is located in a horizontal rest position. When the motor 40 is started, in order to move the load-carrying surface outwardly of the storage structure to its withdrawn position, the chain belt 45 is rotated and therewith moves the attachment device 46 and thus also the frame part 29 to the terminal position illustrated in Figure 2. The journal attachments 27, 28 are also moved together with the second frame part 29, which means that in said terminal position the pivot axle 26 will be located in front of the storage structure and will also be lowered to a lower level, as a result of the inclination of the frame members 30-33. During the aforesaid movement, the outer end of the bracket arm 21 is forced to follow the horizontal path defined by the U-sections 38, 39. Consequently, the length between the pivot axle 26 and the wheel axles 47, 48 of the bracket arm will function as a lever arm and tilt the load-carrying surface 19 forwardly during said movement. The load is thus displaced outwards, lowered and tipped forwards in one and the same movement with the aid of one single drive motor.

As will be understood, the dimensions and angles of the construction can be changed, depending on the extent to which the load-carrying surface is to be displaced and tipped, so as to enable the construction to be used within varying fields or areas. For instance, the load-carrying surface, and the load, may instead start from a low horizontal rest position and be displaced from this position to a higher, outwardly displaced and tipped position. This can be achieved by changing the angle between the load-carrying surface 19 and the bracket arm 21 and/or the positions of the frame members 32, 33, 38, 39 in the storage structure, so that the load-carrying surface is horizontal in the outwardly displaced or withdrawn position corresponding to Figure 2. When the load-carrying surface is moved to the other position corresponding to Figure 1, the load will be raised and tipped forwards in the direction of movement. Furthermore, the actual tipping movement can be achieved in another way, e.g. with the aid of an air bellows or cushion arranged between the second frame part 29 and the load-carrying surface 19, said air bellows when inflated pivoting the load-carrying surface around a pivot shaft. Alternatively, the bracket arm may be driven by a separate pneumatic piston-cylinder device or an electric setting device. Other embodiments are, of course, conceivable within the scope of the following Claims.

## Claims

1. A pallet drawer for handling and storing loads preferably in a storage structure, comprising a support frame (15) intended for installation in the storage structure (12) and a load-carrying surface (19) mounted on the support frame and intended for carrying and moving a load unit (20) between a retracted position located in the storge structure and an extended position located outwardly of the storage structure, wherein the support frame comprises a first frame part (16) which is fixedly mounted in the storage structure and a second frame part (29) which. is movable along the first frame part, said second frame part when in movement entraining the load-carrying surface and therewith causing the load unit to move, **characterized** in that the second frame part (29) is so guided in

5       EP 0 421 963 A1       6

relation to the first frame part (16) that the load unit (20) is lowered or raised to a second level during movement to its withdrawn position and in that a guide means (21, 36, 37) is provided for tipping the load-carrying surface (19) forwards in relation to the support frame (15) so that said load-carrying surface, and therewith the load unit, is displaced outwards, lowered or raised and tipped forwards in the withdrawn position of said surface.

2. A pallet drawer according to Claim 1, **characterized** in that the guide means (21, 36, 37) includes a pivot axle (26) mounted on the second frame part (29) and a drive means (21, 36, 37) for tipping the load-carrying surface (19) around the pivot axle.

3. A pallet drawer according to Claim 2, **characterized** in that the drive means (21, 36, 37) for tipping the load-carrying surface (19) is intended to be driven by movement of the second frame part (25).

4. A pallet drawer according to Claim 3, **characterized** in that the load-carrying surface (19) is carried by a bracket arm (21) which is mounted on and pivotable about said pivot axle (26).

5. A pallet drawer according to Claim 4, **characterized** in that said second frame part (29) is mounted for movement along a rectilinear first path (32, 33) in the first frame part (16); and in that said first frame part (16) incorporates a second rectilinear path (38, 39) which is located beneath the first rectilinear path (32, 33) and converges with said first path; in that a guide means (36, 37) is mounted on the free end of the bracket arm (21) for guiding said arm along said second path when the pivot axle (26) is moved in the direction of the first path together with the second frame part (29), said guide means functioning to tip the load-carrying surface.

6. A pallet drawer according to Claim 5, **characterized** in that the first and second paths (32, 33; 38, 39) converge towards each other at a mutual angle of 10°-30°.

7. A pallet drawer according to any one of the preceding Claims, **characterized** by a drive motor (40) for effecting movement of the second frame part (29).

8. A pallet drawer according to Claim 7, **characterized** in that the drive means for tipping the load-supporting surface includes a separate tipping motor.

9. A pallet drawer according to Claim 7 or 8, **characterized** in that the drive motor (40) is intended to move the second frame part with the aid of an endless belt (41) attached to the first frame part (16).

10. A pallet drawer according to any one of Claims 5-9, **characterized** in that the first rectilinear path (32, 33) slopes downwardly and forwardly from the storage structure, and the second rectilinear path (38, 39) extends substantially horizontally.

4

EP 0 421 963 A1

Fig.1

Fig.2

Fig. 3

FIG. 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 312 426 (REGIE NATIONALE DES USINES RENAULT)<br>* The whole document * | 1 | B 65 G 1/02<br>B 65 G 7/08 |
| A | FR-A-2 614 878 (SOCIETE DES CHARPENTES PHENIX)<br>* The whole document * | 1 | |
| A | DE-U-8 232 005 (HÜLSEMANN)<br>* The whole document * | 1 | |
| A | DE-A-3 248 012 (BAYERISCHE MOTOREN WERKE)<br>* The whole document * | 1 | |
| A | FR-A-2 429 170 (REGIE NATIONALE DES USINES RENAULT)<br>* The whole document * | 1 | |

|  |  |
|---|---|
| | TECHNICAL FIELDS SEARCHED (Int. Cl.5) |
| | B 65 G<br>B 25 H |

The present search report has been drawn up for all claims

| Place of search | Date of completion of search | Examiner |
|---|---|---|
| The Hague | 04 December 90 | OSTYN T.J.M. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

 

& : member of the same patent family, corresponding document